# EUROPÄISCHE PATENTSCHRIFT

(11) **EP 0 651 908 B1**
(45) Veröffentlichungstag und Bekanntmachung des Hinweises auf die Patenterteilung: **08.01.1997**
(21) Anmeldenummer: 93912642.1
(22) Anmeldetag: 01.07.1993
(51) Int. Cl.: G11B 17/22

(54) **VORRICHTUNG ZUM MAGAZINIEREN UND TRANSPORTIEREN IM WESENTLICHEN RUNDER, SCHEIBENFÖRMIGER, GLEICH DIMENSIONIERTER OBJEKTE**
APPARATUS FOR STORING AND TRANSPORTING ESSENTIALLY ROUND, DISK-SHAPED OBJECTS OF UNIFORM DIMENSIONS
DISPOSITIF DE STOCKAGE ET DE TRANSPORT D'OBJETS SENSIBLEMENT RONDS, EN FORME DE DISQUE, DE MEMES DIMENSIONS

(30) Priorität: 20.07.1992 DE 4223813
(43) Veröffentlichungstag der Anmeldung: 10.05.1995
(73) Patentinhaber: STETTER, Martin, D-68789 St. Leon-Rot (DE)
(72) Erfinder: STETTER, Martin, D-68789 St. Leon-Rot (DE)
(74) Vertreter: Naumann, Ulrich, Dr.-Ing.
(86) Internationale Anmeldenummer: DE9300578
(87) Internationale Veröffentlichungsnummer: WO9402941

(56) Entgegenhaltungen:
- DE-A- 3 327 121
- FR-A- 2 388 367
- FR-A- 2 610 755
- US-A- 3 369 814

## Beschreibung

Die Erfindung betrifft eine Vorrichtung zum Magazinieren und Transportieren im wesentlichen runder, scheibenförmiger, gleich dimensionierter Objekte, insbesondere Compact-Disk-Datenträger, mit mindestens einem Magazin und mit mindestens einem als Fördereinrichtung dienenden, um die Mittelachse drehbar gelagerten, antreibbaren Wendelelement, das so angeordnet und dimensioniert ist, daß darauf scheibenförmige Objekte zumindest mit jeweils einem Randabschnitt anordenbar sind.

Aus der FR-A-2 388 367 ist bereits eine Vorrichtung der in Rede stehenden Art bekannt. Beschrieben wird hier ein Förderelement, das im Rahmen von Schallplatten-bzw. CD-Wechslern eingesetzt wird und zur Beförderung der Tonträger aus einem Magazin auf den Plattenteller dient. Das Magazin ist hier mit einem Abstand H oberhalb des Plattentellers angeordnet, so daß die scheibenförmigen Tonträger nur durch das seitlich und bezüglich der vertikalen Richtung zwischen dem Magazin und dem Plattenteller angeordnete Förderelement am freien Fall auf den Plattenteller gehindert werden. Dieses Förderelement ist nach Art eines Wendelelementes ausgebildet und umfaßt an seinem oberen Ende eine Rückhalteplatte, die zur Separierung des untersten, im Magazin angeordneten Tonträgers dient. Das Förderelement ist im wesentlichen zylindrisch ausgebildet, wobei in der Manteloberfläche eine schraubenartig um den Umfang des Förderelements angeordnete Gleitfläche ausgebildet ist.

In Verbindung mit Compactdiskabspielgeräten sind außerdem CD-Wechsler bekannt, die in der Regel ein Fassungsvermögen von 6 bis 10 CDs haben. Die Archivierung von größeren Mengen an CDs mit diesen bekannten CD-Wechslern ist relativ platzaufwendig und massenintensiv, da jeder einzelnen CD ein spezieller Kunststoffteller zugeordnet ist, der im Falle des Zugriffs auf eine bestimmte CD mit dieser bewegt wird. Aus dem Stand der Technik sind ferner sogenannte CD-Juke-Boxen bekannt, die auf dem Prinzip von Juke-Boxen für Schallplatten beruhen und ein Fassungsvermögen von ca. 50 bis 100 CDs aufweisen. Eine ortsfeste mechanische Greifvorrichtung entnimmt einer Position eines relativ zur Greifvorrichtung bewegbaren Magazins oder eine bewegbare Greifvorrichtung entnimmt einem ortsfesten Magazin eine CD und übergibt sie einem CD-Abspielgerät. Im ersten Falle wird das Magazin solange nicht weiterbewegt, bis die entnommene CD mit Hilfe der Greifvorrichtung wieder an ihrer ursprünglichen Position im Magazin abgelegt ist. Erst dann wird das Magazin zur Entnahme einer anderen gewünschten CD weiter bewegt. Dieses Verfahren führt zu relativ langen Warte- bzw. Zugriffszeiten beim Wechseln von CDs. Die bekannten CD-Juke-Boxen weisen außerdem eine hohe Empfindlichkeit gegen mechanische Erschütterungen des Magazins auf, bei denen die CDs verrutschen oder herausfallen können, wodurch dann die gesamte Mechanik blockiert wird. Der Austausch einzelner bzw. aller CDs solcher Geräte ist meist sehr aufwendig und wird in der Regel nur von Fachpersonal vorgenommen.

Beide bekannten Systeme sind bezüglich ihres Fassungsvermögens, ihres Platzbedarfs, des Bedienaufwands und auch des Bedienkomforts in der Praxis problematisch.

Der Erfindung liegt daher die Aufgabe zugrunde, eine Vorrichtung zum Magazinieren und Transportieren runder, scheibenförmiger, gleich dimensionierter Objekte der in Rede stehenden Art anzugeben, mit der auf möglichst kleinem Raum eine möglichst große Anzahl dieser scheibenförmigen Objekte magaziniert werden kann und mit der auch der Transport der scheibenförmigen Objekte in horizontaler Richtung - aber ohne direkte Ausnutzung der Schwerkraft - möglich ist.

Die erfindungsgemäße Vorrichtung zum Magazinieren und Transportieren im wesentlichen runder, scheibenförmiger, gleich dimensionierter Objekte löst die voranstehende Aufgabe durch die Merkmale des Patentanspruchs 1. Danach ist die eingangs genannte Vorrichtung derart ausgebildet, daß das Wendelelement eine Folge von gleichförmigen Gangabschnitten aufweist, daß in den Gangabschnitten des Wendelelements jeweils ein scheibenförmiges Objekt zumindest mit einem Randabschnitt anordenbar ist und daß die Ganghöhe des Wendelelements entsprechend der Dicke der scheibenförmigen Objekte so dimensioniert ist, daß das Wendelelement eine Halterung für die scheibenförmigen Objekte bildet.

Erfindungsgemäß ist zunächst erkannt worden, daß sich gleich dimensionierte, scheibenförmige Objekte auf einfache Weise auf einer Fördereinrichtung, insbesondere in der Folge von gleichförmigen Gangabschnitten eines Wendelelements anordnen lassen bzw. daß sich die scheibenförmigen Objekte so anordnen lassen, daß zumindest ihre Randbereiche in die Gangabschnitte eines Wendelelements eingreifen. Es ist zudem erkannt worden, daß im wesentlichen runde, scheibenförmige Objekte auch mit Hilfe von drehbar gelagerten, antreibbaren Wendelelementen transportiert werden können, wenn sie in den Gangabschnitten eines solchen Wendelelements angeordnet sind. Die Verwendung von Wendelelementen zum Magazinieren und Transportieren im wesentlichen runder, scheibenförmiger, gleich dimensionierter Objekte ist besonders vorteilhaft, da eine relativ hohe Packungsdichte der scheibenförmigen Objekte erreicht werden kann. Der Abstand zwischen zwei der scheibenförmigen Objekte wird nämlich lediglich durch die Ganghöhe des Wendelelements bestimmt. Von Vorteil ist zudem, daß auch zum Transport der scheibenförmigen Objekte keine zusätzlichen Mittel, wie z.B. spezielle Kunststoffteller oder ähnliches, benötigt werden, da der Transport nahezu masselos durch die Drehbewegung des Wendelelements erfolgt. Die erfindungsgemäße Vorrichtung läßt sich auch auf einfache Weise durch Kopplung mehrerer Magazine erweitern. Zudem ist der Austausch sowie das Entfernen und Hinzufügen weiterer scheibenförmiger Objekte einfach und von jedermann durchzuführen.

Es sei an dieser Stelle ausdrücklich darauf hingewiesen, daß die erfindungsgemäße Vorrichtung nicht nur zum Magazinieren und Transportieren von Compact-Disk-Datenträgern, sondern auch für andere scheibenförmige Objekte, wie beispielsweise Schallplatten, Teller, etc. verwendet werden kann.

Damit zu jedem Zeitpunkt der Archivierung und auch des Transportes jedes der runden, scheibenförmigen Objekte definiert gehalten wird, ist die Ganghöhe des Wendelelements erfindungsgemäß entsprechend der Dicke der scheibenförmigen Objekte dimensioniert, so daß das Wendelelement eine Halterung für die scheibenförmigen Objekte bildet.

Der wahlweise Zugriff auf bestimmte im Magazin angeordnete scheibenförmige Objekte kann effektiver und schneller erfolgen, wenn die Antriebs- und Drehrichtung sowie die Drehgeschwindigkeit des Wendelelements wählbar und veränderbar ist. Als Wendelelement eignet sich sowohl ein Element ohne Seele, wie beispielsweise eine Spirale, als auch ein Element mit Seele, wie beispielsweise eine Schnecke.

Das Material des Wendelelements, sowie seine Oberflächenbeschaffenheit ist in Abhängigkeit von den zu magazinierenden und zu transportierenden scheibenförmigen Objekten zu wählen. Für bestimmte Anwendungen ist es vorteilhaft, die Oberfläche des Wendelelements mit einem weichen Schaumstoff oder Gewebematerial zu umhüllen, um die Oberfläche der scheibenförmigen Objekte beim Transport zu schonen. Ebenso könnte das Wendelelement aus demgleichen Material wie das scheibenförmige Objekt bestehen.

Zur Stabilisierung der Lagerung der scheibenförmigen Objekte beim Transport ist es vorteilhaft, in einem Magazin mehrere Wendelelemente anzuordnen, die an den Randbereichen der scheibenförmigen Objekte, am Umfang verteilt angreifen. In diesem Falle ist es sinnvoll, wenn die Drehbewegung der Wendelelemente gekoppelt ist, so daß sowohl die Richtung, als auch die Geschwindigkeit der Drehbewegung der Wendelelemente eines Magazins gemeinsam veränderbar ist. Zusätzlich zu den als Transportmittel dienenden Wendelelementen können auch weitere, an den Randbereichen der scheibenförmigen Objekte angreifende Stütz- und Führungsmittel, beispielsweise in Form von Führungsstangen, vorgesehen sein.

Insbesondere wenn die erfindungsgemäße Vorrichtung als ein Modul eines gesamten Systems, beispielsweise zum Abspielen von CDs, verwendet wird, ist es vorteilhaft, wenn auch ein Manipulator vorgesehen ist, der auf die Endposition des Magazins Zugriff hat, da bei jeder Umdrehung des Wendelelements jedes der scheibenförmigen Objekte um eine Position auf die entsprechende Endposition des Magazin zubewegt wird. Mit Hilfe des Manipulators ist dann automatisch das scheibenförmige Objekt in der jeweiligen Endposition dem Magazin entnehmbar und an eine weitere Vorrichtung übergebbar. Es ist außerdem vorteilhaft, wenn scheibenförmige Objekte auch mit Hilfe des Manipulators in dem Magazin positionierbar sind. Als weitere Vorrichtung kommen beispielsweise weitere Magazine oder auch im Falle von CDs ein CD-Abspielgerät oder im Falle von scheibenförmigen Objekten mit anderen Funktionen auch andere Vorrichtungen in Frage.

Besonders vorteilhaft ist es, wenn die Vorrichtung eine Anordnung von mindestens zwei im wesentlichen gleichlangen, parallel ausgerichteten Magazinen aufweist, die mit jeweils zumindest einem sich über die gesamte Länge des Magazins erstreckenden Wendelelement versehen sind, und wenn an beiden Enden der Magazinanordnung zumindest ein Manipulator vorgesehen ist mit wahlweisem Zugriff auf eines der in der jeweiligen Endposition eines der Magazine der Magazinanordnung angeordneten scheibenförmigen Objekte. Eine solche Anordnung stellt eine einfache Erweiterung einer Magaziniervorrichtung dar, wobei die Zugriffszeiten auf ein bestimmtes scheibenförmiges Objekt im Vergleich mit dem Zugriff auf nur eines der Magazine nicht wesentlich länger sind. Dies wurde durch die parallele Anordnung der einzelnen Magazine und dem wahlweisen Zugriff auf eine Endposition eines der beiden Magazine erreicht.

Mit einer Anordnung von zwei im wesentlichen gleichlangen, parallel ausgerichteten Magazinen kann auf einfache Weise ein Umlauf bzw. Kreistransport der scheibenförmigen Objekte realisiert werden, indem die Drehbewegungen der Wendelelemente der beiden Magazine der Magazinanordnung entsprechend gekoppelt werden. In diesem Falle dient zumindest einer der Manipulatoren als Übergabemanipulator, indem er wahlweise der Endposition eines der beiden Magazine ein scheibenförmiges Objekt entnimmt und in die Endposition des anderen Magazins übergibt. Wenn auch der am anderen Ende der Magazinanordnung angeordnete Manipulator die Funktion eines Übergabemanipulators erfüllt, so können die scheibenförmigen Objekte in einer Kreisbewegung von einem Magazin in das andere bewegt werden. Dies ist besonders vorteilhaft, wenn der andere Manipulator nicht nur die Funktion eines Übergabemanipulators erfüllt, sondern zusätzlich noch bestimmte scheibenförmige Objekte dem Kreislauf entnehmen und an eine weitere Vorrichtung übergeben kann bzw. weitere scheibenförmige Objekte in den Kreislauf der bereits magazinierten Objekte einfügen kann. Insbesondere beim Kreisbewegungsbetrieb einer solchen erfindungsgemäßen Magazinanordnung ist es vorteilhaft, wenn die Bewegung des oder der als Übergabemanipulatoren dienenden Manipulatoren mit den Drehbewegungen der Wendelelemente der Magazine der Magazinanordnung gekoppelt sind. Eine Koordinierung der Manipulatorbewegungen sowie der Drehbewegungen der Wendelelemente, d.h. der Trans-portrichtung und der Transportgeschwindigkeit ist auch mit Hilfe von Sensoren denkbar. In diesem Falle läßt sich die erfindungsgemäße Vorrichtung einfach durch Mittel erweitern, mit denen die Drehbewegungen der Wendelelemente der Magazine und/oder die Bewegungen der Manipulatoren steuerbar und/oder programmierbar sind. Mit dem Einsatz von PC-gestützter Steuerung über Datenbanken und mit Hilfe von Netzwerken kann beispielsweise die Direktwahl von bestimmten scheibenförmigen Objekten sowie die Programmierung einer Abfolge von scheibenförmigen Objekten programmiert werden. Insbesondere für Anwendungen im CD-Bereich ist dies besonders vorteilhaft, wenn beispielsweise eine Abfolge von Musiktiteln automatisch aufrufbar ist.

Bei Verwendung der erfindungsgemäßen Vorrichtung zum Magazinieren und Transportieren von scheibenförmigen Objekten mit einer Durchgangsöffnung läßt sich der Manipulator auf einfache Weise durch mindestens eine stiftartige, wahlweise aktivierbare Klemmvorrichtung realisieren, die in die Durchgangsöffnung eines scheibenförmigen Objekts eingreift und in aktiviertem Zustand eine Klemmwirkung auf den Randbereich der Durchgangsöffnung ausübt. Zur Verkürzung der Zugriffszeiten ist es vorteilhaft, wenn beispielsweise der Übergabemanipulator mindestens zwei gegeneinander versetzt angeordnete und bewegbare, stiftartige Klemmvorrichtungen für jeweils ein scheibenförmiges Objekt aufweist. Eine solche stiftartige Klemmvorrichtung wird auf einfache Weise durch einen konischen Stift gebildet und eine diesen umgebende Anordnung von mindestens zwei in ihren Endbereichen hakenförmig ausgebildeten Blattfedern, wobei der konische Stift bezüglich der Blattfederanordnung verschiebbar ist. Dabei werden die Blattfedern je nach Verschiebungsrichtung des konischen Stifts entweder auseinandergedrückt, oder sie nähern sich aufgrund ihrer Rückstellkraft einander an. D.h. durch Betätigen, bzw. durch Verschieben des konischen Stifts bezüglich der Blattfederanordnung kann die Klemmvorrichtung wahlweise aktiviert bzw. desaktiviert werden. Zur Fixierung der relativen Position des Stiftes zur Blattfederanordnung können zusätzliche Mittel, wie beispielsweise entsprechend ausgebildete Manschetten oder Rastmittel, vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: die Aufsicht auf eine Magazinanordnung,
- Fig. 2: die Frontansicht auf die in Fig. 1 dargestellte Magazinanordnung,
- Fig. 3a bis c: die schematische Darstellung der Funktionsweise der Manipulatoren und
- Fig. 4: eine Ausgestaltung einer stiftartigen Klemmvorrichtung.

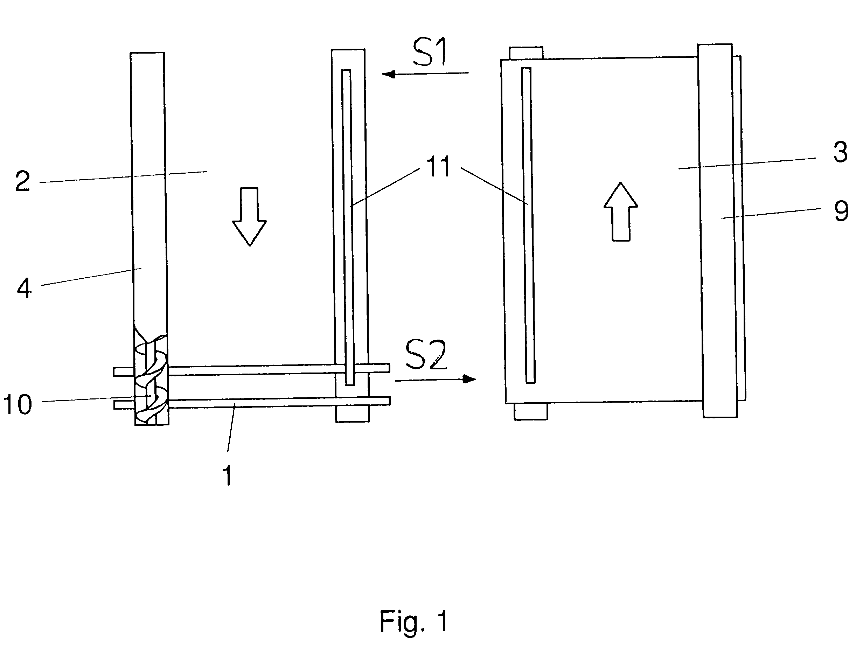

In Fig. 1 sind zwei parallel angeordnete Magazine 2 und 3 in einer Aufsicht dargestellt, wobei diese Magazine 2 und 3 jeweils von einem eigenen oder auch zusammen von einem gemeinsamen Gehäuse umgeben sein können, was hier jedoch der Übersicht halber nicht dargestellt ist. Die Magazine 2 und 3 dieses Ausführungsbeispiels sind punktsymmetrisch zueinander ausgebildet, weshalb im folgenden hauptsächlich nur das Magazin 2 beschrieben ist. In dem Magazin 2 sind Wendelelemente 4, 5 und 6 angeordnet, von denen in der Aufsicht nur das Wendelelement 4 erkennbar ist. Die Wendelelemente 4, 5 und 6 sind durch um ihre Mittelachse drehbar gelagerte Schnecken gebildet, die jeweils eine Folge von gleichförmigen Gangabschnitten 10 aufweisen. In die Gangabschnitte 10 der Schnecken 4, 5 und 6 des Magazins 2 eingreifend sind scheibenförmige Objekte, in diesem Beispiel CDs 1, angeordnet. Das Magazin 3 ist entsprechend mit Schnecken 7, 8 und 9 ausgestattet. Des weiteren sind in der Aufsicht der Magazinanordnung Haltestangen 11 dargestellt, die jeweils parallel zu den Schnecken 4 und 9 in den Magazinen 2 und 3 angeordnet sind. Diese Haltestangen 11 dienen als Führungsmittel für die CDs 1, die durch eine Drehbewegung der Schnecken 4, 5, 6; 7, 8, 9 eines Magazins 2, 3 je nach Drehrichtung innerhalb der Magazine 2, 3 in die durch die Doppelpfeile angedeuteten Richtungen transportiert werden. Bei jeder Umdrehung der Schnecken 4, 5, 6; 7, 8, 9 eines Magazins 2, 3 werden die CDs 1 um eine Position in die jeweilige Richtung verschoben. Je nach Ausgestaltung der Ganghöhe der Schnecken sowie des Materials und der Oberflächenbeschaffenheit der Schnecken in Verbindung mit der Oberflächenbeschaffenheit der CDs bzw. anderer scheibenförmiger Objekte werden die CDs bzw. die anderen scheibenförmigen Objekte bei der Transportbewegung mitgedreht.

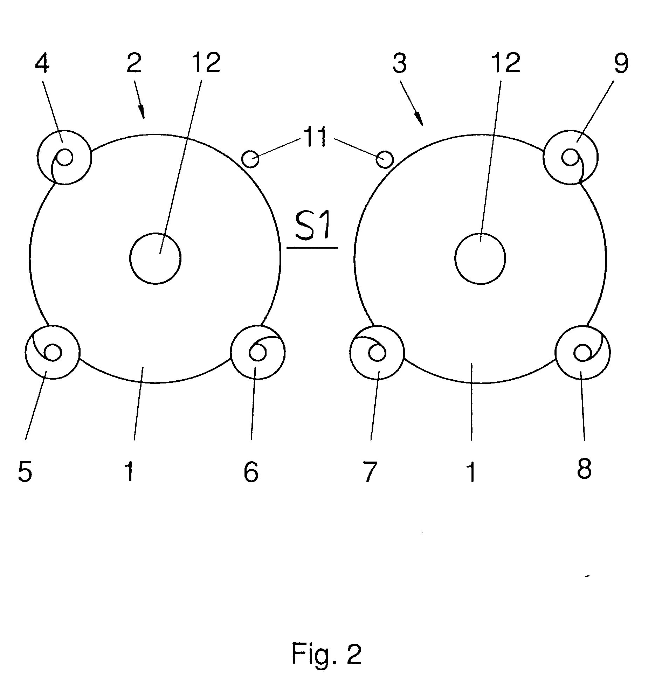

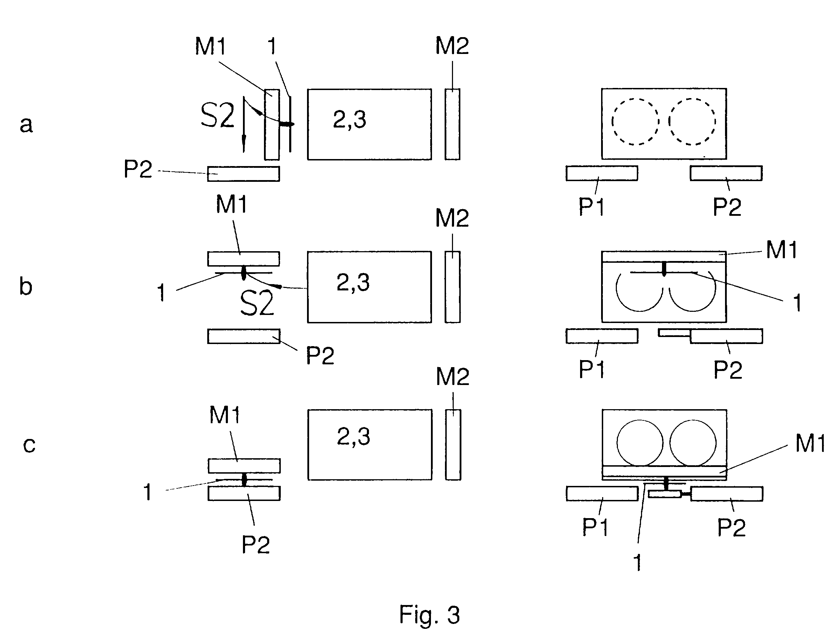

In Fig. 2 ist die in Fig. 1 dargestellte Anordnung in einer Frontansicht dargestellt. Daraus ist ersichtlich, daß die CDs eines jeden Magazins 2 und 3 jeweils durch drei, am Umfang der CDs verteilt angreifende Schnecken 4, 5 und 6 sowie 7, 8 und 9 gehalten und transportiert werden. Durch den Pfeil S1 ist angedeutet, daß eine Übergabe der CDs von einem Magazin 2 in das andere Magazin 3 vorgesehen ist, indem jeweils eine CD aus einer Endposition des einen Magazins 2 in die entsprechende Endposition des anderen Magazins 3 übergeben wird. Dazu sind in diesem Ausführungsbeispiel die Haltestangen 11 kürzer ausgebildet als die Schnecken 4, 5, 6; 7, 8, 9 der beiden Magazine 2 und 3, was aus Fig. 1 ersichtlich ist. Zur Übergabe der CDs 1 ist eine Manipulatorvorrichtung vorgesehen, deren Funktionsweise in den Fig. 3a bis c dargestellt ist.

In der linken Spalte der Fig. 3a bis c sind jeweils Seitenansichten von Magazinanordnungen 2, 3 mit Manipulatoren M1 und M2 dargestellt. In der rechten Spalte der Fig. 3a bis c ist jeweils die entsprechende Frontansicht der Magazinanordnung 2, 3 dargestellt. Der mit M2 bezeichnete Manipulator am einen Ende der Magazinanordnung 2, 3 dient lediglich zur Übergabe der CDs 1 von einem Magazin in das andere Magazin, wodurch eine Art Kreisbewegung der CDs 1 in den beiden Magazinen 2, 3 realisiert wird. Der mit M1 bezeichnete Manipulator dient sowohl zur Übergabe von CDs 1 aus einem Magazin in das andere Magazin als auch zur Entnahme und Übergabe von CDs 1 an weitere Vorrichtungen, wie in diesem Beispiel den Schlitten eines CD-Players P2. Mit dem Pfeil S2 ist der Weg bezeichnet, den eine CD 1 zurücklegt, wenn sie von dem Manipulator M1 erfaßt und an einen CD-Player P2 übergeben wird. Denselben Weg in umgekehrter Richtung beschreibt die CD 1, wenn sie von dem Manipulator M1 aus dem CD-Player P2 entnommen und wieder in eines der Magazine 2 oder 3 eingefügt wird. In der Frontansicht ist dargestellt, daß die erfindungsgemäße Vorrichtung vorteilhaft in Verbindung mit zwei CD-Playern P1 und P2 verwendet werden kann, die abwechselnd bedient werden.

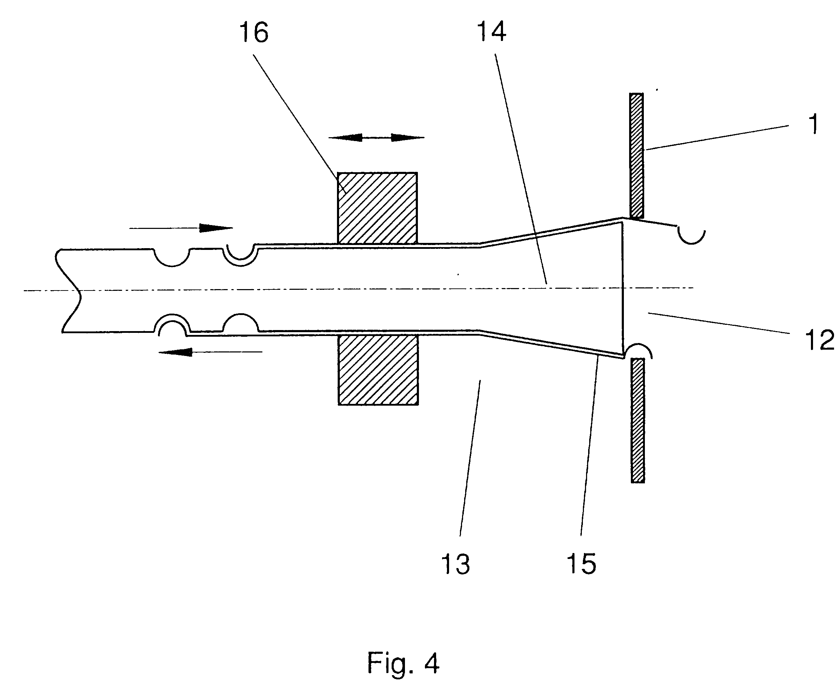

In Fig. 4 ist eine Klemmvorrichtung 13 dargestellt, die einen konischen Stift 14 aufweist. Dieser Stift ist von einer Anordnung von Blattfedern 15 umgeben, die in ihren Endbereichen hakenförmig ausgebildet sind. Der Stift 14 ist gegen die Anordnung der Blattfedern 15 verschiebbar, wobei er je nach Verschiebungsrichtung wahlweise die hakenförmigen Endbereiche der Blattfedern 15 auseinanderdrückt oder sich die hakenförmigen Endbereiche der Blattfedern 15 aufgrund der Rückstellkräfte dieser Blattfedern 15 annähern. Die relative Position des konischen Stifts 14 zu den Blattfedern 15 läßt sich durch eine Manschette 16 fixieren. Diese Klemmvorrichtung 13, die einen Bestandteil eines Manipulators bildet, greift in das Durchgangsloch 12 einer CD 1 ein, wird aktiviert, indem die hakenförmigen Endbereiche der Blattfedern 15 durch Verschieben des Stiftes 14 auseinandergedrückt werden. Dabei üben die hakenförmigen Endbereiche der Blattfedern 15 eine Klemmwirkung auf den Randbereich der Durchgangsöffnung 12 der CD 1 aus, so daß der Manipulator die CD 1 sicher greifen und transportieren kann. Dazu wird die Klemmwirkung bzw. die relative Position des konischen Stifts 14 zu der Anordnung der Blattfedern 15 durch die Manschette 16 fixiert. Nach dem Transport der CD 1 kann die Klemmwirkung durch nochmaliges Verschieben in entgegengesetzter Richtung des Stiftes 14 bezüglich der Anordnung der Blattfedern 15 wieder gelöst werden. Das Fixieren der relativen Position des Stiftes 14 zu der Anordnung der Blattfedern 15 kann jedoch auch durch entsprechend angeordnete und ausgebildete Rastmittel an dem Stift 14 und den Blattfedern 15 realisiert werden.

Hinsichtlich weiterer in den Figuren nicht gezeigter Merkmale wird auf den allgemeinen Teil der Beschreibung verwiesen.

Abschließend sei hervorgehoben, daß die erfindungsgemäße Lehre nicht auf das voranstehend erörterte Ausführungsbeispiel beschränkt ist. Die erfindungsgemäße Lehre läßt sich vielmehr auch bei anders ausgestalteten Vorrichtungen je nach Dimensionen und Funktionen der zu magazinierenden und transportierenden runden, scheibenförmigen Objekte realisieren.

## Patentansprüche

1. Vorrichtung zum Magazinieren und Transportieren im wesentlichen runder, scheibenförmiger, gleich dimensionierter Objekte (1), insbesondere Compact-Disk-Datenträger, mit mindestens einem Magazin (2, 3) und mit mindestens einem als Fördereinrichtung dienenden, um die Mittelachse drehbar gelagerten, antreibbaren Wendelelement (4, 5, 6; 7, 8, 9), das so angeordnet und dimensioniert ist, daß darauf scheibenförmige Objekte (1) zumindest mit jeweils einem Randabschnitt anordenbar sind, **dadurch gekennzeichnet,** daß das Wendelelement (4, 5, 6; 7, 8, 9) eine Folge von gleichförmigen Gangabschnitten aufweist, daß in den Gangabschnitten des Wendelelements (4, 5, 6; 7, 8, 9) jeweils ein scheibenförmiges Objekt (1) zumindest mit einem Randabschnitt anordenbar ist und daß die Ganghöhe des Wendelelements (4, 5, 6; 7, 8, 9) entsprechend der Dicke der scheibenförmigen Objekte (1) so dimensioniert ist, daß das Wendelelement (4, 5, 6; 7, 8, 9) eine Halterung für die scheibenförmigen Objekte (1) bildet.

2. Vorrichtung nach Anspruch 1, dadurch gekennzeichnet, daß die Antriebs- und Drehrichtung und/oder die Drehgeschwindigkeit des Wendelelements (4, 5, 6; 7, 8, 9) wählbar und veränderbar ist.

3. Vorrichtung nach einem der Ansprüche 1 oder 2, dadurch gekennzeichnet, daß das Wendelelement (4, 5, 6; 7, 8, 9) durch eine Spirale oder eine Schnecke gebildet ist.

4. Vorrichtung nach einem der Ansprüche 1 bis 3, dadurch gekennzeichnet, daß das Magazin (2, 3) mehrere an den Randbereichen der scheibenförmigen Objekte um den Umfang verteilt angreifende Wendelelemente (4, 5, 6; 7, 8, 9) aufweist und daß die Drehbewegung der Wendelelemente (4, 5, 6; 7, 8, 9) gekoppelt ist.

5. Vorrichtung nach einem der Ansprüche 1 bis 4, dadurch gekennzeichnet, daß mindestens ein Manipulator (M1, M2) vorgesehen ist, der auf das in einer Endposition des Magazins (2, 3) angeordnete scheibenförmige Objekt (1) Zugriff hat und daß der Manipulator (M1, M2) so angeordnet und ausgestaltet ist, daß die scheibenförmigen Objekte (1) mit Hilfe des Manipulators (M1, M2) aus dem Magazin (2, 3) entnehmbar und an eine weitere Vorrichtung (P1, P2) übergebbar sind und daß die scheibenförmigen Objekte (1) mit Hilfe des Manipulators (M1, M2) in dem Magazin (2, 3) positionierbar sind.

6. Vorrichtung nach einem der Ansprüche 1 bis 5, dadurch gekennzeichnet, daß eine Anordnung von mindestens zwei im wesentlichen gleichlangen, parallel ausgerichteten Magazinen (2, 3) vorgesehen ist, daß jedes der Magazine (2, 3) zumindest ein sich über die gesamte Länge des Magazins erstreckendes Wendelelement (4, 5, 6; 7, 8, 9) aufweist, daß an beiden Enden der Magazinanordnung zumindest ein Manipulator (M1, M2) vorgesehen ist, mit wahlweisem Zugriff auf eines der in der jeweiligen Endposition eines der Magazine (2, 3) der Magazinanordnung angeordneten scheibenförmigen Objekte (1) und daß die Drehbewegungen der Wendelelemente (4, 5, 6; 7, 8, 9) der Magazine (2, 3) der Magazinanordnung gekoppelt sind.

7. Vorrichtung nach Anspruch 9 oder 10, dadurch gekennzeichnet, daß zumindest einer der Manipulatoren einen Übergabemanipulator (M2) bildet, indem er wahlweise einem der mindestens zwei Magazine (2, 3) scheibenförmige Objekte (1) entnimmt und in dem jeweils anderen Magazin (2, 3) positioniert und daß die Bewegung des Übergabemanipulators (M2) mit den Drehbewegungen der Wendelelemente (4, 5, 6; 7, 8, 9) der Magazine (2, 3) der Magazinanordnung gekoppelt sind.

8. Vorrichtung nach einem der Ansprüche 1 bis 7, dadurch gekennzeichnet, daß Mittel vorgesehen sind zum Steuern und/oder Programmieren der Drehbewegungen der Wendelelemente (4, 5, 6; 7, 8, 9) der Magazine und/oder der Bewegungen der Manipulatoren (M1, M2) und/oder der Vorrichtungen (P1, P2).

9. Vorrichtung nach einem der Ansprüche 1 bis 8, wobei sie zum Magazinieren und Transportieren eine Durchgangsöffnung (12) aufweisender scheibenförmiger Objekte (1) verwendet wird, dadurch gekennzeichnet, daß der Manipulator (M1, M2) mindestens eine stiftartige, wahlweise aktivierbare Klemmvorrichtung (13) aufweist, die in die Durchgangsöffnung (12) eines scheibenförmigen Objekts (1) eingreift und im aktiviertem Zustand eine Klemmwirkung auf den Randbereich der Durchgangsöffnung (12) ausübt.

10. Vorrichtung nach einem der Ansprüche 7 bis 9, dadurch gekennzeichnet, daß der Übergabemanipulator (M1, M2) mindestens zwei gegeneinander versetzt angeordnete und bewegbare, stiftartige Klemmvorrichtungen (13) für jeweils ein scheibenförmiges Objekt (1) aufweist und daß die stiftartige Klemmvorrichtung (13) einem konischen Stift (14) und eine diesen umgebende Anordnung von mindestens zwei in ihren Endbereichen hakenförmig ausgebildeten Blattfedern (15) aufweist, wobei der konische Stift (13) bezüglich der Blattfederanordnung verschiebbar ist.

## Claims

1. A device for storing and transporting substantially round, disk-shaped, objects (1) of like dimension, in particular a compact disk data carrier, with at least one magazine (2, 3) and with at least one drivable turning element (4, 5, 6; 7, 8, 9), which acts as a conveying device, is mounted so as to rotate about its central axis and is arranged and dimensioned in such a manner that disk-shaped objects (1) can be arranged at least with a peripheral section upon said turning element, characterised in that the turning element (4, 5, 6; 7, 8, 9) comprises a sequence of moving sections of the same shape, a disk-shaped object (1) can be arranged at least with a peripheral section in the moving sections of the turning element (4, 5, 6; 7, 8, 9), and the height of the sections of the turning element (4, 5, 6; 7, 8, 9) is dimensioned to correspond to the thickness of the disk-shaped objects (1), so that the turning element (4, 5, 6; 7, 8, 9) acts as a holder for the disk-shaped objects (1).

2. A device according to claim 1, characterised in that the drive and rotating device and/or the rotational velocity of the turning element (4, 5, 6; 7, 8, 9) is selectable and variable.

3. A device according to one of claims 1 or 2, characterised in that the turning element (4, 5, 6; 7, 8, 9) is formed by a spiral or a worm.

4. A device according to one of claims 1 to 3, characterised in that the magazine (2, 3) comprises a plurality of turning elements (4, 5, 6; 7, 8, 9), which act upon the edge regions of the disk-shaped objects, distributed about the circumference thereof, and the rotational movement of the turning elements (4, 5, 6; 7, 8, 9) is coupled.

5. A device according to one of claims 1 to 4, characterised in that at least one manipulator (M1, M2) is provided, which has access to the disk-shaped object (1) arranged in an end position of the magazine (2, 3) and the manipulator (M1, M2) is arranged and constructed in such a manner that the disk-shaped objects (1) can be removed from the magazine (2, 3) with the aid of the manipulator (M1, M2) and transferred to a further device (P1, P2), and the disk-shaped objects (1) can be positioned in the magazine (2, 3) with the aid of the manipulator (M1, M2).

6. A device according to one of claims 1 to 5, characterised in that an arrangement of at least two parallelly aligned magazines (2, 3) of substantially equal length is provided, each of the magazines (2, 3) comprises at least one turning element (4, 5, 6; 7, 8, 9) extending over the entire length of the magazine, at least one manipulator (M1, M2) is provided at both ends of the magazine arrangement, with selective access to one of the disk-shaped objects (1) arranged in the respective end position of one of the magazines (2, 3) of the magazine arrangement, and the rotational movements of the turning elements (4, 5, 6; 7, 8, 9) of the magazines (2, 3) of the magazine arrangement are coupled.

7. A device according to claim 9 or 10, characterised in that at least one of the manipulators acts as a transfer manipulator (M2) by selectively removing disk-shaped objects (1) from one of the at least two magazines (2, 3) and positioning said objects in the respective other magazine (2, 3), and the movements of the transfer manipulator (M2) are coupled with the rotational movements of the turning elements (4, 5, 6; 7, 8, 9) of the magazines (2, 3) of the magazine arrangement.

8. A device according to one of claims 1 to 7, characterised in that means are provided for controlling and/or programming the rotational movements of the turning elements (4, 5, 6; 7, 8, 9) of the magazines and/or the movements of the manipulators (M1, M2) and/or of the devices (P1, P2).

9. A device according to one of claims 1 to 8, said device being used for storing and transporting disk-shaped objects (1) comprising a through opening (12), characterised in that the manipulator (M1, M2) comprises at least one rod-like clamping device (13), which can be selectively actuated, engages in the through opening (12) of a disk-shaped object (1) and in its actuated state exerts a clamping effect upon the edge region of the through opening (12).

10. A device according to one of claims 7 to 9, characterised in that the transfer manipulator (M1, M2) comprises at least two rod-like clamping devices (13), which are arranged offset and are movable relative to one another, for a disk-shaped object (1) in each case, and the rod-like clamping device (13) comprises a conical rod (14) and an arrangement enclosing said rod of at least two leaf springs (15) having hooked end regions, the conical rod (13) being displaceable relative to the leaf spring arrangement.

## Revendications

1. Dispositif de stockage et de transport d'objets sensiblement ronds (1) en forme de disque, de mêmes dimensions, notamment de supports de données dits disques compacts (CD), dispositif comprenant au moins un magasin (2, 3) avec au moins un élément en colimaçon entraînable (4, 5, 6; 7, 8, 9) servant de moyen de transport monté à rotation autour de l'axe central, élément en colimaçon qui est disposé et dimensionné de manière telle qu'il permet de retenir par au moins un secteur marginal des objets en forme de disque (1),
caractérisé en ce que l'élément en colimaçon (4, 5, 6; 7, 8, 9) présente une succession de pas de forme identique, en ce que dans les pas de l'élément en colimaçon (4, 5, 6; 7, 8, 9) peut être disposé un objet en forme de disque (1) retenu au moins par un secteur marginal et en ce que la hauteur du pas de l'élément en colimaçon (4, 5, 6; 7, 8, 9) est, en fonction de l'épaisseur des objets en forme de disque (1), dimensionnée de manière telle que l'élément en colimaçon (4, 5, 6; 7, 8, 9) constitue un support pour les objets en forme de disque (1).

2. Dispositif suivant la revendication 1, caractérisé en ce que le sens d'entraînement et de rotation et/ou la vitesse de rotation de l'élément en colimaçon (4, 5, 6; 7, 8, 9) peuvent être choisis à volonté et sont variables.

3. Dispositif suivant l'une des revendications 1 et 2, caractérisé en ce que l'élément en colimaçon (4, 5, 6; 7, 8, 9) est constitué par une spirale ou une vis sans fin.

4. Dispositif suivant l'une quelconque des revendications de 1 à 3, caractérisé en ce que le magasin (2, 3) présente plusieurs éléments en colimaçon (4, 5, 6; 7, 8, 9) distribués sur la périphérie des objets en forme de disque et supportant les zones marginales de ces objets, et en ce que les mouvements de rotation des éléments en colimaçon (4, 5, 6; 7, 8, 9) sont accouplés.

5. Dispositif suivant l'une quelconque des revendications de 1 à 4, caractérisé en ce qu'il est prévu au moins un élément de manipulation (M1, M2), qui a accès à l'objet en forme de disque (1) occupant une position terminale dans le magasin, et en ce que l'élément de manipulation (M1, M2) est disposé et conçu de manière telle que les objets en forme de disque (1) peuvent à l'aide de l'élément de manipulation (M1, M2) être prélevés du magasin pour être transférés vers un autre dispositif (P1, P2), et en ce que les objets en forme de disque (1) peuvent, à l'aide de l'élément de manipulation (M1, M2), être placés dans une position déterminée dans le magasin (2, 3).

6. Dispositif suivant l'une quelconque des revendications de 1 à 5, caractérisé en ce qu'un groupe d'au moins deux magasins (2, 3) sensiblement de même longueur et parallèles est prévue, en ce que chaque magasin (2, 3) présente au moins un élément en colimaçon (4, 5, 6; 7, 8, 9) s'étendant sur toute la longueur du magasin, en ce qu'à chaque extrémité du groupe de magasins est prévu au moins un élément de manipulation (M1, M2), ayant accès à volonté à l'un des objets en forme de disque (1) occupant une position terminale d'un des magasins (2, 3) du groupe de magasins, et en ce que les mouvements de rotation des éléments en colimaçon (4, 5, 6; 7, 8, 9) des magasins (2, 3) du groupe de magasins sont accouplés.

7. Dispositif suivant la revendication 5 ou la revendication 6, caractérisé en ce qu'au moins l'un des éléments de manipulation constitue un élément de transfert (M2), en ce qu'à volonté il prélève, dans l'un des au moins deux magasins (2, 3), des objets en forme de disque (1) pour les placer dans l'autre ou dans un autre magasin (2, 3) et en ce que le mouvement de l'élément de transfert (M2) est accouplé aux mouvements de rotation des éléments en colimaçon (4, 5, 6; 7, 8, 9) des magasins (2, 3) du groupe de magasins.

8. Dispositif suivant l'une quelconque des revendications de 1 à 7, caractérisé en ce que des moyens sont prévus pour la commande et/ou la programmation des éléments en colimaçon (4, 5, 6; 7, 8, 9) des magasins et/ou les mouvements des éléments de manipulation (M1, M2) et/ou des dispositifs (P1, P2).

9. Dispositif suivant l'une quelconque des revendications de 1 à 7, utilisé pour le stockage et le transport d'objets en forme de disque (1) présentant une ouverture, caractérisé en ce que l'élément de manipulation (M1, M2) présente au moins un dispositif de serrage (13) en forme de cheville pouvant être activé à volonté, dispositif s'engageant dans l'ouverture (12) d'un objet en forme de disque (1) et qui, à l'état activé, exerce une action de serrage sur la portion marginale de l'ouverture (12).

10. Dispositif suivant l'une quelconque des revendications de 7 à 9, caractérisé en ce que l'élément de transfert (M1, M2) présente au moins deux dispositifs de serrage (13) mobiles en forme de cheville, décalés l'un par rapport à l'autre, affectés chacun à un objet en forme de disque (1), et en ce que le dispositif de serrage en forme de cheville (13) présente une cheville conique (14) entourée d'au moins deux lames de ressort (15) à extrémités en forme de crochet, la cheville conique (13) pouvant effectuer un mouvement de translation par rapport aux lames de ressort.
